# EUROPÄISCHE PATENTSCHRIFT

(11) **EP 0 583 638 B1**
(45) Veröffentlichungstag und Bekanntmachung des Hinweises auf die Patenterteilung: **10.06.1998**
(21) Anmeldenummer: 93111645.3
(22) Anmeldetag: 21.07.1993
(51) Int. Cl.: G11B 7/085, G11B 27/10, G11B 21/08

(54) **CD-Spieler**
CD-player
Lecteur de CD

(30) Priorität: 04.08.1992 DE 4225727
(43) Veröffentlichungstag der Anmeldung: 23.02.1994
(73) Patentinhaber: Blaupunkt-Werke GmbH, 31132 Hildesheim (DE)
(72) Erfinder: Baas, Dieter, D-7640 Auenheim (DE)

(56) Entgegenhaltungen:
- EP-A- 0 303 369
- EP-A- 0 497 387
- DE-A- 3 807 180
- GB-A- 2 228 132
- US-A- 4 805 050
- PATENT ABSTRACTS OF JAPAN vol. 13, no. 502 (P-958)13. November 1989 & JP-A-01 201 859 (PIONEER ELECTRONICS CORP.)
- PATENT ABSTRACTS OF JAPAN vol. 16, no. 167 (P-1342)22. April 1992 & JP-A-04 014 691 (PIONEER ELECTRONICS CORP.)

## Beschreibung

### Stand der Technik

Gegenstand des Schutzrechtes ist ein neuer CD-Spieler. Bei dem Aufbau der Schaltungen der Abspielgeräte für Compact-Disc (CD) sind die Normungen zu berücksichtigen, die getroffen worden sind, um die CD aus verschiedenen Preßwerken auf den CD-Spielern der verschiedenen Hersteller abspielen zu können. So werden alle CD's von innen nach außen abgetastet. Die Aufzeichnungen beginnen mit dem Inhaltsverzeichnis im sogenannten TOC-Bereich. Um diesen Bereich zuerst nach dem Einlegen einer neuen CD in dem Spieler anzufahren, ist entweder ein mechanischer Anschlag für den Abtastkopfträger vorgesehen oder ein Schalter, welcher den Antrieb der Positioniereinrichtung des Abtastkopfes stoppt, sobald dieser den Disc-Anfang erreicht.

Aus der GB 2 228 132 A ist bereits ein Plattenspieler mit einem Abtastkopfsteuersystem bekannt, bei dem Positionsdaten, die die aktuelle Position des Abtastkopfes repräsentieren, von der Platte gelesen werden. Der Abstand von der aktuellen Position zur Ausgangsposition des Abtastkopfes wird gemäß den gelesenen Positionsdaten berechnet. Der Abtastkopf wird zur Ausgangsposition gemäß des berechneten Abstandes bewegt. Der Abtastkopf wird zur Ausgangsposition bewegt um beispielsweise den TOC zu lesen, um die Wiedergabe der Platte zu starten. Zu diesem Zweck werden erste Adreßdaten von der Platte durch den Abtastkopf gelesen, um die aktuelle Position des Abtastkopfes zu detektieren. Anschließend wird der Abstand des Abtastkopfes von der aktuellen Position zur Ausgangsposition berechnet. Gemäß des berechneten Abstands wird ein Antriebsmotor angesteuert, um den Abtastkopf um diesen Abstand zu bewegen. Somit wird der Abtastkopf an der Ausgangsposition positioniert. Dabei wird aus dem Abstand zwischen der aktuellen Position des Abtastkopfes und der Ausgangsposition die Zeit ermittelt, die für die Bewegung des Abtastkopfes durch den Antriebsmotor erforderlich ist. Wenn diese Zeit verstrichen ist, wird der Antriebsmotor gestoppt. Wenn sich der Abtastkopf in der Ausgangsposition befindet, werden die zugehörigen Adreßdaten von der Platte gelesen, und aufgrund der gelesenen Adreßdaten wird die TOC-Position berechnet. Der Abtastkopf wird dann zu der berechneten TOC-Position bewegt, wo die Inhalte des TOC durch den Abtastkopf gelesen werden.

### Vorteile der Erfindung

Der erfindungsgemäße CD-Spieler mit den Merkmalen des Hauptanspruchs hat demgegenüber den Vorteil, daß der Spursprung von der aktuellen Position zu einer Position im TOC-Bereich besonders schnell und einfach realisierbar ist, da nur ein einziger Spursprung erforderlich ist und die Sprungweite zwischen der Programmstartspur und einer Spur im TOC-Bereich fest vorgegeben ist und daher nicht ständig neu berechnet werden muß.

Ein weiterer Vorteil besteht darin, daß der Spursprung von der aktuellen Position in den TOC-Bereich genauer realisierbar ist, da der Abtastkopf um eine berechnete Anzahl von Spuren zurückgeführt wird.

### Zeichnung

Die Erfindung wird anhand eines Querschnitts durch eine CD in Figur 1, einem Blockschaltbild eines CD-Spielers in Figur 2 und eines Ablaufplans für die Positioniereinrichtung in Figur 3 näher erläutert.

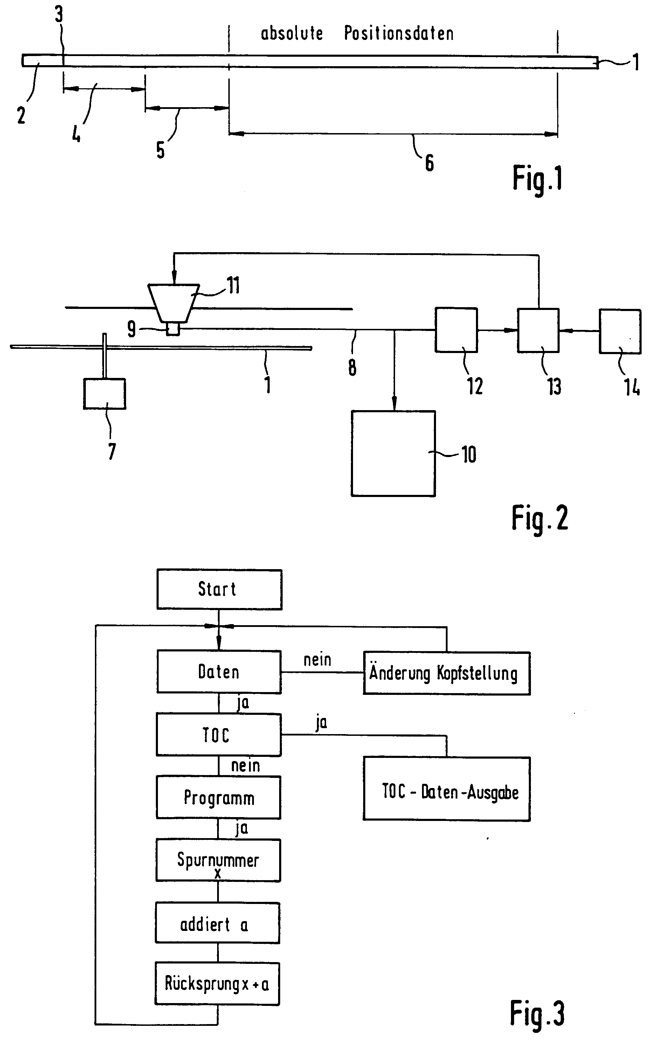

Dem in Figur 1 dargestellten Querschnitt durch eine CD 1 ist zu entnehmen, daß sich an das zentrische Plattenloch 2 zur Justierung der CD 1 auf dem Plattenteller ein Bereich 3 anschließt, in dem keine Daten aufgezeichnet sind. Es folgt dann der TOC-Bereich 4, in welchem die Inhaltsangabe mehrfach aufgezeichnet ist, sich also im Laufe der Abtastung wiederholt. Dieser TOC-Bereich ist ungefähr 2 mm breit. Auf den TOC-Bereich 4 folgt der Programmbereich 6, der sich bis zum Plattenrand erstreckt. In diesem Programmbereich sind neben den Programmodulationsdaten absolute Positionsdaten mit aufgezeichnet, aus denen sich die genaue Nummer der Spur durch einen Decoder ermitteln läßt, so daß der Abtastkopf jede Programmspur mit Hilfe der Positionierungseinrichtung genau anfahren kann. Diese absoluten Positionsdaten fehlen im TOC-Bereich. Daher fährt man den Anfang des TOC-Bereiches mit Hilfe der Schalter bzw. der Anschläge an.

Geht man jedoch entsprechend dem in Figur 3 wiedergegebenen Befehlsfluß vor, dann läßt sich auch der Anfang eines Inhaltsverzeichnisses im TOC-Bereich sicher aus den normgerecht aufgezeichneten Daten finden.

Ist der Spieler 7 gestartet worden, so wird an dem Signalausgang 8 des Abtastkopfes 9 durch die Auswerteschaltung 10 zunächst geprüft, ob in der momentanen Stellung des Abtastkopfes überhaupt eine Spur lesbar ist, d. h., ob sich also ein Datenfluß am Signalausgang 8 erkennen läßt. Ist dies nicht der Fall, so wird über die Positioniereinrichtung 11 die Position des Abtastkopfes 9 geändert, wobei die Sprungweite und -richtung zunächst beliebig ist. Zweckmäßigerweise wird die Sprungrichtung gewechselt, wenn der erste Sprung nicht auf eine ablesbare Spur führte.

Ist so eine Spur gefunden worden, so werden die Daten am Signalausgang 8 in der Auswerteschaltung 10 analysiert, wobei sich aus der Datenstruktur ergibt, wann der Datenfluß eine Inhaltsangabe enthält und wann Programmdaten.

Aus den Daten im Programmbereich 6 läßt sich in dem Decoder 12 die Spurnummer, d. h. die Zahl der Spuren errechnen, die zwischen dem Programmstart und der abgetasteten Spur liegen.

Sind solche absolute Positionsdaten im Datenfluß enthalten, dann wird der Abtastkopf 9 um die ermittelte Anzahl von Spuren zurückgesetzt und zwar auf die Programmstartspur. Danach erhält die Positioniereinrichtung 11 einen weiteren Sprungbefehl nach innen, um eine in dem Speicher 13 fest vorgegebene Anzahl von Spuren.

Diese Sprungweite läßt sich, wie der Erfinder erkannt hat, fest vorgeben, weil sich aus der Normung von Spurbreite und Spurabstand die ungefähr erforderliche Anzahl der Spuren im etwa 2 mm breiten TOC-Bereich ergibt. Um den Abtastkopf 11 in die Nähe des Disc-Anfanges 2 zu bringen. Dann wird mit Sicherheit bei dem nachfolgenden Lesen des Spurinhaltes irgendwann einmal der Anfang einer Inhaltsangabe erkannt, von der aus dann die Übernahme der gelesenen Daten in die Auswerteschaltung 10 möglich ist, da ja nach der Norm das Inhaltsverzeichnis in diesem Bereich mehrfach aufgezeichnet ist.

Zweckmäßigerweise wird der Sprung von dem ersten Standort des Abtastkopfes 9 in die Nähe des Disc-Anfanges zusammenhängend erfolgen, indem die bei der Auslegung des CD-Spielers in dem Speicher 13 vorgegebene Sprungweite direkt der im Decoder 12 festgestellten Spurnummer im Addierer 14 hinzuaddiert wird und ein entsprechend größerer Rücksprung eingeleitet wird.

Hat die Positionierungseinrichtung 11 den Abtastkopf 9 zufällig in einer Spur aufgesetzt, die am Ende des TOC-Bereiches 3 liegt, dann läuft der Abtastkopf auf den Programmstart mit der Spurnummer "1" zu und wird von diesem aus dann um die im Speicher 13 fest vorgegebene Spuranzahl zurückversetzt, wonach der Abtastkopf mit Sicherheit bald auf den Anfang einer Inhaltsangabe aufläuft.

Wurde der Abtastkopf 9 dagegen von der Positioniereinrichtung 11 nach dem Einlegen einer CD in den CD-Speicher am Anfang des TOC-Bereiches aufgesetzt, dann ist eine Repositionierung des Abtastkopfes nicht erforderlich.

## Patentansprüche

1. CD-Spieler mit einer Positioniereinrichtung (11) zur Einstellung des Abtastkopfes (9) auf eine vorgegebene Spurnummer und mit einem Decoder (12) für die in den gelesenen Daten enthaltene Spurnummer, wobei zum Anfahren eines TOC-Bereichs (4) auf einer CD (1) beim Aufsetzen des Abtastkopfes (9) in einem Programmbereich (5) eine Ermittlung einer aktuellen Position erfolgt, dadurch gekennzeichnet, daß die Positioniereinrichtung (11) den Abtastkopf (9) von der aktuellen Position in genau einem Spursprung eine Anzahl von Spuren zurückführt, die sich aus der Summe einer bei der aktuellen Position ermittelten Spurnummer und einer vorgegebenen Spuranzahl ergibt, so daß der Abtastkopf (9) nach dem Spursprung über eine Programmstartspur hinaus auf eine Spur im TOC-Bereich (4) eingestellt ist.

## Claims

1. CD player having a positioning device (11) for setting the scanning head (9) to a predetermined track number and having a decoder (12) for the track number contained in the data that are read, a determination of a current position being carried out for the purpose of moving to a TOC area (4) on a CD (1) when the scanning head (9) has been placed in a programme area (5), characterized in that the positioning device (11) moves the scanning head (9) back a number of tracks from the current position in exactly one track jump, the number of tracks resulting from the sum of a track number determined at the current position and a predetermined track number, with the result that after the track jump beyond a programme start track, the scanning head (9) is set to a track in the TOC area (4).

## Revendications

1. Lecteur de disque compact (disque CD) comprenant une installation de positionnement (11) pour régler la tête de lecture (9) sur un numéro de piste donné, ainsi qu'un décodeur (12) pour le numéro de piste contenu dans les données lues,
et, pour démarrer une plage TOC (4) (informations de tête de piste) sur un disque CD (1) lors de la mise en place de la tête de lecture (9) dans une plage de programme (5), on détermine la position actuelle,
caractérisé en ce que
l'installation de positionnement (11) rappelle la tête de lecture (9) à partir de la position actuelle par un saut de piste précis, suivant un nombre de pistes correspondant à la somme d'un numéro de piste défini par la position actuelle et d'un nombre de pistes prédéterminé, de façon que la tête de lecture (9), après le saut de piste, soit réglée au-delà d'une piste de démarrage de programme sur une piste de la plage TOC (4).
